Europäisches Patentamt

European Patent Office

Office européen des brevets

(11) Publication number: **0 185 503**
**B1**

(12) **EUROPEAN PATENT SPECIFICATION**

(45) Date of publication of patent specification: **06.02.91**

(21) Application number: **85308961.3**

(22) Date of filing: **10.12.85**

(51) Int. Cl.⁵: **H 04 N 11/00, H 04 N 5/44,**
**H 04 N 9/64**

(54) **Digital scan converters.**

(30) Priority: **11.12.84 JP 261617/84**

(43) Date of publication of application:
**25.06.86 Bulletin 86/26**

(45) Publication of the grant of the patent:
**06.02.91 Bulletin 91/06**

(84) Designated Contracting States:
**DE FR GB NL**

(56) References cited:
**GB-A-2 114 848**
**US-A-4 415 931**

**PATENT ABSTRACTS OF JAPAN, vol. 9, no. 216
(E-340)1939r, 3rd September 1985 & JP-A-60-
75192**

(73) Proprietor: **SONY CORPORATION**
**7-35 Kitashinagawa 6-Chome Shinagawa-ku
Tokyo 141 (JP)**

(72) Inventor: **Kita, Hiroyuki c/o Patents Division
Sony Corporation 6-7-35 Kitashinagawa
Shinagwa-ku Tokyo 141 (JP)**
Inventor: **Tokuhara, Masaharu c/o Patents
Division
Sony Corporation 6-7-35 Kitashinagawa
Shinagwa-ku Tokyo 141 (JP)**
Inventor: **Kawashima, Hiroyuki c/o Patents
Division
Sony Corporation 6-7-35 Kitashinagawa
Shinagwa-ku Tokyo 141 (JP)**

(74) Representative: **Cotter, Ivan John et al
D. YOUNG & CO. 10 Staple Inn
London WC1V 7RD (GB)**

EP 0 185 503 B1

Courier Press, Leamington Spa, England.

## Description

This invention relates to digital scan converters and particularly, but not exclusively, to digital scan converters suitable for use with a high definition television receiver in which the number of horizontal lines of a video signal is doubled so as thereby to display a picture of high definition.

In a previously proposed digital scan converter, a standard composite colour video signal is supplied to a luminance/chrominance (Y/C) signal processor circuit which generates standard red, green and blue analog primary colour signals R, G and B. The red, green and blue analog primary colour signals are supplied to an analog-to-digital (A/D) converter and thereby converted to red, green and blue digital primary colour signals which are written in a memory at one speed and read from the memory at a faster speed for achieving a scan conversion by which the number of horizontal scanning lines is doubled. The scan-converted red, green and blue digital primary colour signals read from the memory are supplied to a digital-to-analog (D/A) converter in which they are converted to scan-converted red, green and blue analog primary colour signals. The input standard composite colour video signal is supplied also to a deflection integrated circuit (IC) which generates a composite synchronising signal and a composite blanking signal. The composite blanking signal is provided by an automatic frequency control (AFC) circuit incorporated in the deflection IC and is applied to the Y/C processor circuit for carrying out blanking of the red, green and blue primary colour signals generated by the Y/C processor circuit. Problems arise if the foregoing arrangement for blanking the three primary colour signals is employed in a digital scan converter in which a horizontal synchronising pulse from the deflection IC is supplied to a second AFC circuit and a voltage controlled oscillator (VCO) is controlled by an output signal from the second AFC circuit to provide a clock signal supplied to a writing address counter and a reading address counter, with address signals therefrom being supplied through a selector to the memory for controlling the writing and reading of the memory, and with the address signal from the reading address counter being supplied further to a synchronising signal generator circuit which generates a horizontal synchronising pulse signal that is synchronised with the reading address counter and supplied to the second AFC circuit. Thus, the input video signal and the address signal are synchronised with each other. However, the AFC circuit incorporated in the deflection IC for providing the composite blanking signal and the second AFC circuit for controlling the VCO are not synchronised with each other. As a result of the foregoing, jitter components of the two AFC circuits may appear to be multiplied with each other. In that case, the blanking periods of the red, green and blue primary colour signals will overlap the writing address periods of the memory so that the blanking period will appear as a black area at the left hand end or the right hand end of the displayed picture.

According to the invention there is provided a digital scan converter comprising:

means for converting an input composite video signal to red, green and blue analog primary colour signals;

analog-to-digital converter means for converting the red, green and blue analog primary colour signals to red, green and blue digital primary colour signals, respectively;

memory means for storing the red, green and blue digital primary colour signals.

means for controlling writing of the red green and blue digital primary colour signals in the memory means at a predetermined writing speed;

means for controlling reading of the red, green and blue digital primary colour signals from the memory means at a reading speed faster than the writing speed;

digital-to-analog converter means for converting the red, green and blue digital primary colour signals read from the memory means to scan-converted red, green and blue analog primary colour signals;

means for separating synchronising signals from the input composite video signal;

clock signal generating means synchronised with synchronising signals separated from the input composite video signal for supplying clock signals to the means for controlling writing and the means for controlling reading;

means for generating horizontal blanking signals synchronised with output signals of the means for controlling writing;

means for generating vertical blanking signals synchronised with synchronising signals from the synchronising signal separating means; and means for generating composite blanking signals from said horizontal blanking signals and said vertical blanking signals.

A preferred form of digital scan converter embodying the invention and described hereinbelow can prevent the appearance of the blanking period on a picture displayed on a video screen due to a jitter component. The preferred digital scan converter is suitable for use with a high definition television receiver.

The invention will now be further described, by way of illustrative and non-limiting example. with reference to the accompanying drawings, in which like references designate corresponding elements and parts throughout, and in which:

Figure 1 is a block diagram showing an example of a video display system which employs a digital scan converter;

Figure 2 is a block diagram showing an example of a digital scan converter with a previously proposed arrangement for providing composite blanking signals; and

Figure 3 is a block diagram of a digital scan converter embodying the present invention.

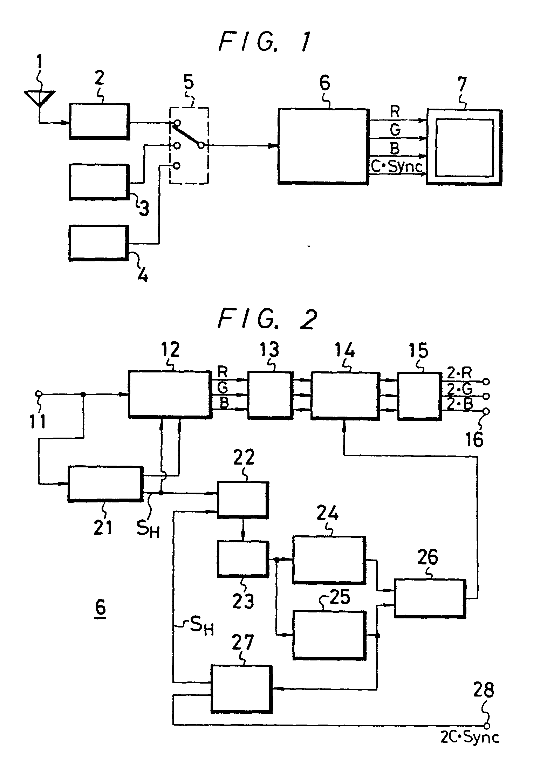

Figure 1 shows an example of a video display system which uses a digital scan converter, and in which an aerial (antenna) 1 receives broadcast television signals. The broadcast television signals received by the aerial 1 are supplied to a tuner 2 in which they are demodulated to provide a composite video signal. The composite video signal is fed to one input of an input selector circuit 5 which, at other inputs thereof, is supplied with composite video signals from a video tape recorder (VTR) 3 and from a microcomputer 4. A composite video signal selected by the input selector circuit 5 is supplied to a digital scan converter 6. In the digital scan converter 6, the selected input composite video signal is converted to scan-converted red, green and blue primary colour signals R, G and B. The scan-converted red, green and blue primary colour signals R, G and B, together with a composite synchronising signal C and a scan-converted composite synchronising signal SYNC, are supplied to a monitor or receiver 7 so that a picture of relatively high definition can be displayed on the video screen of the monitor or receiver 7.

It has been proposed, for example as disclosed in detail in our copending European Patent Application No. 85308844.1 EP-0184448 filed 4 December 1985, (corresponding to our Japanese Patent Applications Nos. 59/258269 and 59/261616), that the digital scan converter 6 in the video display system of Figure 1 may have an input terminal 11 which receives the composite colour video signal according to the NTSC or other standard television system and, as shown in Figure 2, applies the composite colour video signal to a luminance/chrominance (Y/C) signal processor circuit 12 which generates standard red, green and blue analog primary colour signals R, G and B. The red, green and blue analog primary colour signals R, G and B are supplied to an analog-to-digital (A/D) converter 13 and converted thereby to red, green and blue digital primary colour signals. The red, green and blue digital primary colour signals from the A/D converter 13 are supplied to a memory 14 in which the scan conversion process is carried out to double or otherwise increase the number of horizontal scanning lines. The resulting scan-converted red, green and blue digital primary colour signals from the memory 14 are supplied to a digital-to-analog (D/A) converter 15 in which they are converted to scan-converted red, green and blue analog primary colour signals 2.R, 2.G and 2.B which are delivered to respective output terminals 16.

The composite video signal applied to the input terminal 11 is supplied also to a deflection integrated circuit (IC) 21 which generates a horizontal synchronising pulse signal $S_H$ which is supplied to one input of an automatic frequency control (AFC) circuit 22. A voltage controlled oscillator (VCO) 23 is controlled by an output signal from the AFC circuit 22. An output signal from the VCO 23 is supplied to a writing or write address counter 24 and a reading or read address counter 25 which act as frequency dividers, and the resulting writing and reading address signals therefrom are supplied selectively through an address selector 26 to the memory 14 for controlling the writing in and the reading from the memory. The address signal from the reading address counter 25 is supplied also to a synchronising signal generator circuit 27 which then generates a horizontal synchronising pulse signal $S_H$ synchronised with the reading address counter 25 and supplies the horizontal synchronising pulse signal to another input of the AFC circuit 22. Thus, the composite input video signal and the address signal are synchronised with each other. Also, the synchronising signal generator circuit 27 generates a scan-converted composite synchronising signal 2C.SYNC whose horizontal frequency is twice the normal or standard horizontal frequency and whose vertical frequency is a standard frequency. The scan-converted composite synchronising signal 2C.SYNC is delivered to an output terminal 28.

In accordance with previously proposed practice, in the digital scan converter shown in Figure 2, the blanking of the red, green and blue primary colour signals generated from the Y/C processor circuit 12 is carried out by using a composite blanking signal derived from the deflection IC 21. This composite blanking signal is generated by another AFC circuit (not shown) incorporated in the deflection IC 21. In that case, problems will arise, for example, upon occurrence of a jitter component of the AFC circuit incorporated in the deflection IC 21.

More specifically, in the digital scan converter having its composite blanking signal provided from the deflection IC 21, as shown in Figure 2 the AFC circuit 22, which is used to control generation of the address signals for the memory 14, and the other AFC circuit incorporated in the deflection IC 21, are not synchronised with each other. As a result, a case may be encountered in which jitter components of these AFC circuits appear to be multiplied with each other. By reason of the foregoing, the blanking periods of the red, green and blue primary colour signals enter or at least partly coincide with writing address periods of the memory 14 so that the blanking period is displayed on a screen of a cathode ray tube (CRT) as a black area at the left hand end or the right hand end of the displayed picture.

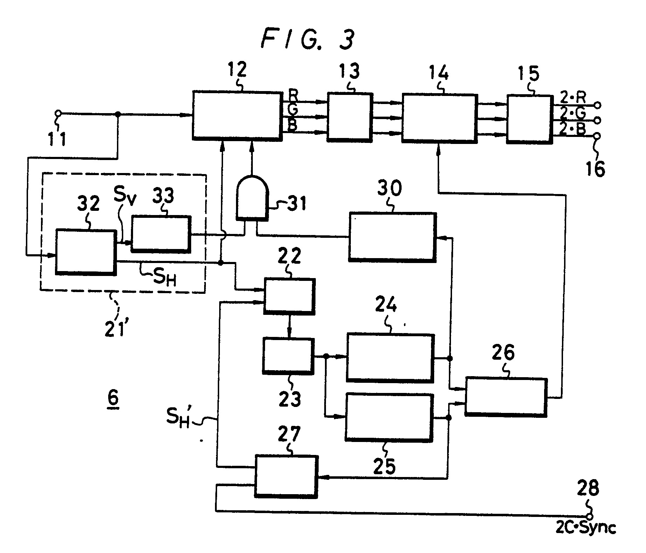

The foregoing problem can be avoided or at least alleviated by a digital scan converter embodying the present invention which will now be described with reference to Figure 3, in which parts corresponding to those described with reference to Figure 2 are identified by the sane references and will not be described in detail.

In the digital scan converter of Figure 3, a deflection IC 21' includes a synchronising signal separating circuit or separator 32 which is operative to separate a vertical synchronising signal $S_V$ and a horizontal synchronising signal $S_H$ from the input composite video signal. The vertical synchronising signal $S_V$ is supplied to a vertical blanking signal generating circuit 33 also included in the deflection IC 21'.

Further, the address signal from the writing address counter 24 is supplied to a horizontal blanking signal generator circuit 30 which generates a horizontal blanking signal synchronised with the write address signal. The horizontal blanking signal from the horizontal blanking signal generator circuit 30 and the vertical blanking signal from the vertical blanking signal generator circuit 33 are both supplied to an AND circuit 31. A composite blanking output signal from the AND circuit 31 is supplied to the Y/C processor circuit 12 to control the blanking of the primary colour signals R, G and B therein. Other circuit elements are connected similarly to the like numbered elements of Figure 2. Thus, the horizontal synchronising signal $S_H$ separated from the input composite video signal by the separating circuit 32 to the deflection IC 21' is applied to one input of the AFC circuit 22 for phase comparison therein with the horizontal synchronising signal $S'_H$ provided by the synchronising signal generator 27 in synchronism with the read address output of the counter 25. The VCO 23 which provides the clock signals counted by the write and read address counters 24 and 25, is, in turn, controlled by the phase comparison in the AFC 22.

As in the earlier described digital scan converter, the scan-converted red, green and blue primary colour signals 2.R, 2.G and 2.B and the scan-converted synchronising signal 2C.SYNC are developed at the output terminals 16 and 28, respectively, of the digital scan converter shown in Figure 3. However, in the digital scan converter of Figure 3, the blanking of the red, green and blue primary colour signals R, G and B from the Y/C processor circuit 12 is synchronised with the address signals of the memory 14, so that the blanking position within the memory 14 is fixed. Thus, when the scan-converted output signal is displayed on a video screen, the blanking period can be prevented from appearing on the picture displayed on the video screen. Even though the jitter component of the AFC circuit 22 may remain, the operation is inherently digital so that the amount of the jitter component is very small. Furthermore, since the scan-converted synchronising signal is formed on the basis of the output from the VCO 23, the blanking period can be prevented from appearing on the picture displayed on the video screen by reason of the jitter component of the AFC circuit 22.

Consequently, in the digital scan converter of Figure 3, since the blanking of the input video signal is effected in synchronism with the address signal of the memory 14, even if jitter occurs in the AFC circuit, the blanking period can be prevented from appearing on the picture displayed on the video screen.

Although the digital scan converter of Figure 3 generates the vertical blanking signal by means of the vertical blanking signal generator circuit 33 on the basis of the vertical synchronising signal separated from the input composite video signal, the vertical blanking signal may be generated by another vertical blanking signal generator circuit synchronised with the writing address counter 24.

In that case, the blanking is carried out more accurately. However, since the vertical blanking is rough as compared with the jitter component of the AFC 22, no trouble will occur even when the vertical blanking signal is not controlled from the writing address counter 24.

## Claims

1. A digital scan converter comprising:
   means (12) for converting an input composite video signal to red, green and blue analog primary colour signals (R, G, B);
   analog-to-digital converter means (13) for converting the red, green and blue analog primary colour signals (R, G, B) to red, green and blue digital primary colour signals, respectively;
   memory means (14) for storing the red, green and blue digital primary colour signals.
   means (24) for controlling writing of the red, green and blue digital primary colour signals in the memory means (14) at a predetermined writing speed;
   means (25) for controlling reading of the red, green and blue digital primary colour signals from the memory means (14) at a reading speed faster than the writing speed;
   digital-to-analog converter means (15) for converting the red, green and blue digital primary colour signals read from the memory means (14) to scan-converted red, green and blue analog primary colour signals (2.R, 2.G, 2.B);
   means (32) for separating synchronising signals from the input composite video signal;
   clock signal generating means (23) synchronised with synchronising signals separated from the input composite video signal for supplying clock signals to the means (24) for controlling writing and the means (25) for controlling reading;
   means (30) for generating horizontal blanking signals synchronised with output signals of the means (24) for controlling writing;
   means (33) for generating vertical blanking signals synchronised with synchronising signals from the synchronising signal separating means (32); and
   means (31) for generating composite blanking signals from said horizontal blanking signals and said vertical blanking signals.

2. A digital scan converter according to claim 1, wherein the means (32) for separating synchronising signals is operative to Provide horizontal synchronising signals ($S_H$) and vertical synchronising signals ($S_V$), said vertical blanking signals are synchronised with the vertical synchronising signals ($S_V$), and the clock signal generating means (23) is synchronised with the horizontal synchronising signals ($S_H$) from the means (32) for separating.

3. A digital scan converter according to claim 2, wherein the means (24) for controlling writing and the means (25) for controlling reading comprise writing address counter means (24) and reading address counter means (25), respectively.

4. A digital scan converter according to claim 3, comprising synchronising signal generating means (27) for supplying horizontal synchronising signals (S'$_H$) synchronised with the reading address counter means (25), and automatic frequency control means (22) for controlling the clock signal generating means (23), the automatic frequency control means (22) being synchronised with the horizontal synchronising signals (S'$_H$) supplied from the synchronising signal generating means (27) and with the horizontal synchronising signals (S$_H$) from the separating means(32).

5. A digital scan converter according to claim 4, wherein the synchronising signal generating means (27) is operative also to produce composite synchronising signals (2C. SYNC) synchronised with an output of the reading address counter means (25).

6. A digital scan converter according to claim 5, comprising selector means (26) for selectively supplying output signals of the writing address counter means (24) and the reading address counter means (25) to the memory means (14).

7. A digital scan converter according to claim 6, wherein the reading speed of the reading address counter means (25) is twice the writing speed of the writing address counter means (24).

8. A digital scan converter according to any one of the preceding claims, wherein the composite blanking signal generating means (31) comprises an AND circuit having inputs corrected to receive the horizontal and vertical blanking signals, respectively

**Patentansprüche**

1. Oigitaler Abtastwandler, bestehend aus
einer Einrichtung (12) zur Umwandlung eines Eingangs-Videosignalgemischs in analoge Rot-, Grün- und Blau-Primärfarbsignale (R, G, B),
einer Analog/Digital-Wandler-Einrichtung (13) zur Umwandlung der analogen Rot-, Grün- und Blau-Primärfarbsignale (R, G, B) in digitale Rot-, Grün- und Blau-Primärfarbsignale,
einer Speichereinrichtung (14) zum Speichern der digitalen Rot-, Grün- und Blau-Primärfarbsignale,
einer Einspeicher-Steuereinrichtung (24) zum Einspeichern der digitalen Rot-, Grün- und Blau-Primärfarbsignale in die genannten Speichermittel (14) mit einer vorbestimmten Einspeichergeschwindigkeit,
einer Auslese-Steuereinrichtung (25) zum Auslesen der digitalen Rot-, Grün- und Blau-Primärfarbsignale aus der Speichereinrichtung (14) mit einer Auslesegeschwindigkeit, die größer als die Einspeichergeschwindigkeit ist,
einer Digital/Analog-Wandlereinrichtung (15) zur Umwandlung der aus der Speichereinrichtung (14) ausgelesenen digitalen Rot-, Grün- und Blau-Primärfarbsignale in abtast-gewandelte analoge Rot-, Grün- und Blau-Primärfarbsignale (2.R, 2.G, 2.B),
einer Trenneinrichtung (32) zum Abtrennen von Synchronisiersignalen aus dem Eingangs-Videosignalgemisch,
eine mit den aus dem Eingangs-Videosignalgemisch abgetrennten Synchronisiersignalen synchronisierte Taktsignal-Generatoreinrichtung (23), die der Einspeicher-Steuereinrichtung (24) und der Auslese-Steuereinrichtung (25) Taktsignale zuführt,
einer Einrichtung (30) zur Erzeugung von horizontalen Austastsignalen, die mit den Ausgangssignalen der Einspeicher-Steuereinrichtung (24) synchronisiert sind,
einer Einrichtung (33) zur Erzeugung vertikaler Austastsignale, die mit Synchronisiersignalen aus der Synchronisiersignal-Trenneinrichtung (32) synchronisiert sind, und
einer Einrichtung (31) zur Erzeugung eines Austastsignalgemischs aus den horizontalen und den vertikalen Austastsignalen.

2. Digitaler Abtastwandler nach Anspruch 1, bei dem die Synchronisiersignal-Trenneinrichtung (32) horizontale Synchronisiersignale (S$_H$) und vertikale Synchronisiersignale (S$_V$) liefert, wobei die vertikalen Austastsignale mit den vertikalen Synchronisiersignalen (S$_V$) synchronisiert sind und wobei die Taktsignal-Generatoreinrichtung (23) mit den horizontalen Synchronisiersignalen (S$_V$) der Synchronisiersignal-Trenneinrichtung (32) synchronisiert ist.

3. Digitaler Abtastwandler nach Anspruch 2, bei dem die Einspeicher-Steuereinrichtung (24) und die Auslese-Steuereinrichtung (25) eine Schreibadressen-Zähleinrichtung (24) bzw. eine Leseadressen-Zähleinrichtung (25) aufweisen.

4. Digitaler Abtastwandler nach Anspruch 3, mit einer Synchronisiersignal-Generatoreinrichtung (27) zur Lieferung von horizontalen Synchronisiersignalen (S'$_H$), die mit der Leseadressen-Zähleinrichtung (25) synchronisiert sind, und einer automatischen Frequenzsteuereinrichtung (22) zur Steuerung der Taktsignal-Generatoreinrichtung (23), wobei diese automatische Frequenzsteuereinrichtung (22) mit den horizontalen Synchronisiersignalen (S$_H$) der Synchronisiersignal-Generatoreinrichtung (27) und mit den horizontalen Synchronisiersignalen (S$_H$) der Trenneinrichtung (32) synchronisiert ist.

5. Digitaler Abtastwandler nach Anspruch 4, bei dem die Synchronisiersignal-Generatoreinrichtung (27) ferner ein Signalgemisch (2C. SYNC) erzeugt, das mit einem Ausgangssignal der Leseadressen-Zähleinrichtung (25) synchronisiert ist.

6. Digitaler Abtastwandler nach Anspruch 5, mit einer Wähleinrichtung (26) zur wahlweisen Zuführung von Ausgangssignalen der Schreibadressen-Zähleinrichtung (24) und der Leseadressen-Zähleinrichtung (25) zur der Speichereinrichtung (14).

7. Digitaler Abtastwandler nach Anspruch 6, bei dem die Auslesegeschwindigkeit der Leseadressen-Zähleinrichtung (25) doppelt so groß ist wie die Einspeichergeschwindigkeit der Schreibadressen-Zähleinrichtung (24).

8. Digitaler Abtastwandler nach einem der vorhergehenden Ansprüche, bei dem die Einrichtung

(31) zur Erzeugung des Austastsignalgemischs ein UND-Glied aufweist mit Eingängen, die das horizontale bzw. das vertikale Austastsignal aufnehmen.

## Revendications

1. Convertisseur de balayage numérique comprenant:

un moyen (12) pour convertir un signal vidéo composite d'entrée en signaux analogiques des couleurs fondamentales rouge, verte et bleue (R, G, B);

un moyen convertisseur analogique-numérique (13) pour convertir les signaux analogiques des couleurs fondamentales rouge, verte et bleue (R, G, B) respectivement en signaux numériques des couleurs fondamentales rouge, verte et bleue;

un moyen à mémoire (14) pour mémoriser les signaux numériques des couleurs fondamentales rouge, verte et bleue.

un moyen (24) pour commander l'écriture des signaux numériques des couleurs fondamentales rouge, verte et bleue dans le moyen à mémoire (14) à une vitesse d'écriture prédéterminée;

un moyen (25) pour commander la lecture des signaux numériques des couleurs fondamentales rouge, verte et bleue provenant du moyen à mémoire (14) à une vitesse de lecture supérieure à la vitesse d'écriture;

un moyen convertisseur numérique-analogique (15) pour convertir les signaux numériques des couleurs fondamentales rouge, verte et bleue provenant du moyen à mémoire (14) en signaux analogiques des couleurs fondamentales rouge, verte et bleue convertis par conversion de balayage (2.R, 2.G, 2.B);

un moyen (32) pour séparer des signaux de synchronisation du signal vidéo composite d'entrée;

un moyen générateur de signaux d'horloge (23) synchronisé avec les signaux de synchronisation séparés du signal vidéo composite d'entrée pour fournir des signaux d'horloge au moyen (24) de commande d'écriture et au moyen (25) de commande de lecture;

un moyen (30) pour engendrer des signaux de suppression de ligne horizontale synchronisés avec les signaux de sortie du moyen (24) de commande d'écriture;

un moyen (33) pour engendrer des signaux de suppression de trame synchronisés avec les signaux de synchronisation provenant du moyen séparateur de signaux de synchronisation (32); et

un moyen (31) pour engendrer des signaux de suppression composites à partir des signaux de suppression de ligne horizontale et des signaux de suppression de trame.

2. Convertisseur de balayage numérique selon la revendication 1, dans lequel le moyen (32) pour séparer les signaux de synchronisation est actif pour fournir des signaux de synchronisation horizontale ($S_H$) et des signaux de synchronisation verticale ($S_V$), les signaux de supresion de trame étant synchronisés avec les signaux de synchronisation verticale ($S_V$), et le moyen générateur de signaux d'horloge (23) étant synchronisé avec les signaux de synchronisation horizontale ($S_H$) provenant du moyen séparateur (32).

3. Convertisseur de balayage numérique selon la revendication 2, dans lequel le moyen de commande d'écriture (24) et le moyen de commande de lecture (25) sont constitués par un moyen compteur d'adresse d'écriture (24) et par un moyen compteur d'adresse de lecture (25), respectivement.

4. Convertisseur de balayage numérique selon la revendication 3, comprenant un moyen générateur de signaux de synchronisation (27) pour fournir des signaux de synchronisation horizontale ($S'_H$) synchronisés avec le moyen compteur d'adresse de lecture (25), et un moyen de réglage de fréquence automatique (22) pour commander le moyen générateur de signaux d'horloge (23), le moyen de réglage de fréquence automatique (22) étant synchronisé avec les signaux de synchronisation horizontale ($S'_H$) fournis par le moyen générateur de signaux de synchronisation (27) et avec les signaux de synchronisation horizontale ($S_H$) provenant du moyen séparateur (32).

5. Convertisseur debalayage numérique selon la revendication 4, dans lequel le moyen générateur de signaux de synchronisation (27) est actif également pour produire des signaux de synchronisation composites (2C. SYNC) synchronisés avec le signal de sortie du moyen compteur d'adresse de lecture (25).

6. Convertisseur de balayage numérique selon la revendication 5, comprenant un moyen sélecteur (26) pour fournir sélectivement les signaux de sortie du moyen compteur d'adresse d'écriture (24) et du moyen compteur d'adresse de lecture (25) au moyen à mémoire (14).

7. Convertisseur de balayage numérique selon la revendication 6, dans lequel la vitesse de lecture du moyen compteur d'adresse de lecture (25) est le double de la vitesse d'écriture du moyen compteur d'adresse d'écriture (24).

8. Convertisseur de balayage numérique selon l'une quelconque des revendications 1 à 7, dans lequel le moyen générateur de signaux de suppression composites (31) est constitué par un circuit ET ayant des signaux d'entrée corrigés pour recevoir respectivement les signaux de suppression de ligne horizontale et de suppression de trame.

FIG. 1

FIG. 2

# FIG. 3